# DEMANDE DE BREVET EUROPEEN

(11) **EP 0 564 325 A1**
(43) Date de publication de la demande: **06.10.1993**
(21) Numéro de dépôt: 93400752.7
(22) Date de dépôt: 23.03.1993
(51) Int. Cl.: B64C 25/14, B64C 25/58

(54) **Atterriseur relevable d'aérodynes, notamment pour hélicoptères**

(30) Priorité: 31.03.1992 FR 9203877
(71) Demandeur: MESSIER BUGATTI, F-78140 Velizy Villacoublay (FR)
(72) Inventeur: Derrien, Michel, F-78000 Versailles (FR)
(74) Mandataire: Jaunez, Xavier

(57) **Abrégé**

L'invention concerne un atterrisseur relevable comportant une jambe d'amortisseur montée pivotante ainsi qu'un vérin de manoeuvre associé.

Conformément à l'invention, la jambe (101) est réalisée en deux éléments (102, 103) articulés entre eux autour d'un axe (104) parallèle à l'axe de pivotement de la jambe et reliés par un amortisseur (105), l'élément inférieur formant un balancier, et l'élément supérieur formant un panneau dont l'extrémité libre est reliée à un vérin de manoeuvre (110) qui est un vérin amortisseur à seuil d'effort, ledit vérin amortisseur servant à appliquer un couple prédéterminé maintenant la jambe (101) dans sa position lors d'un atterrissage normal, tout en autorisant le relevage de cette jambe avec un effort contrôlé en cas d'atterrissage en catastrophe.

## Description

L'invention concerne les atterrisseurs relevables d'aérodynes, notamment pour hélicoptères.

Ces atterrisseurs comportent classiquement une jambe d'atterrisseur montée pivotante sur une structure de l'aérodyne autour d'un axe essentiellement perpendiculaire au plan longitudinal médian de cet aérodyne, et équipée d'au moins une fusée de roue, ainsi qu'un vérin de manoeuvre associé, fonctionnant en général en extension pour le relevage de ladite jambe, le point d'articulation dudit vérin étant disposé au-dessus de l'axe de pivotement de la jambe.

On connaît de nombreux atterrisseurs de ce type dont la jambe est élastique, en étant constituée d'un caisson d'amortisseur articulé sur la structure de l'aérodyne, et d'une tige coulissante équipée d'au moins une fusée de roue (le vérin de manoeuvre agit alors directement sur le caisson d'amortisseur pour amener la jambe en position sensiblement verticale pour l'atterrissage ou en position relevée sensiblement horizontale). La fusée de roue est en général alors agencée en partie basse de la tige coulissante, ou parfois montée en extrémité d'un balancier qui est articulé sur une chape du caisson d'amortisseur et qui est également relié, de façon articulée, à la tige coulissante.

Lorsqu'on souhaite disposer d'un atterrisseur capable de faire face à une situation d'atterrissage en catastrophe, communément appelée situation de "crash", il est nécessaire de pouvoir utiliser une course importante et de prévoir en sus un dispositif d'écrêtage d'efforts qui soit capable d'entrer rapidement en action pour tenir compte de la vitesse verticale d'impact qui est beaucoup plus importante qu'en situation d'atterrissage normal.

Il existe déjà des amortisseurs équipés de moyens d'écrêtage d'efforts intervenant en cas de surpression excessive, mais ces amortisseurs nécessitent une hauteur de train importante.

Dans le cas des hélicoptères, et même de certains avions, l'atterrisseur relevable est disposé sous le poste de pilotage, de sorte que la hauteur du train est en général volontairement limitée afin de réduire au maximum la hauteur de l'hélicoptère, tant pour assurer une bonne stabilité de celui-ci avec un centre de gravité aussi bas que possible, que pour pouvoir garer l'hélicoptère dans des entrepôts ou sur les ponts des bateaux avec une hauteur imposée maximale pour les portes.

Avec les atterrisseurs connus précités, la limitation est alors donnée par une paroi correspondant au plancher de cabine.

Par suite, la course maximale de la jambe élastique est limitée, par exemple, à une valeur voisine de 400mm.

Une telle course limitée est naturellement compatible avec les efforts verticaux rencontrés dans des situations normales d'atterrissage, mais en général insuffisante pour limiter les efforts en cas d'atterrissage en catastrophe (situation de crash).

L'invention a précisément pour but de résoudre ce problème, en concevant un atterrisseur relevable qui soit capable de faire face à une situation d'atterrissage en catastrophe.

L'invention a ainsi pour objet de réaliser un atterrisseur relevable dont la structure permette une absorption d'énergie satisfaisante lors d'un atterrissage en catastrophe, avec une capacité maximale de course pour sa jambe.

Il s'agit plus particulièrement d'un atterrisseur relevable d'aérodyne, notamment pour hélicoptère, comportant une jambe d'atterrisseur montée pivotante sur une structure de l'aérodyne autour d'un axe essentiellement perpendiculaire au plan longitudinal médian de cet aérodyne, et équipée d'au moins une fusée de roue, ainsi qu'un vérin de manoeuvre associé pour la descente et le relevage de ladite jambe, caractérisé par le fait que la jambe d'atterrisseur est réalisée en deux éléments qui sont articulés entre eux autour d'un axe parallèle à l'axe de pivotement de ladite jambe et reliés entre eux par un amortisseur, avec un élément inférieur réalisé sous la forme d'un balancier dont l'extrémité libre est équipée d'au moins une fusée de roue, et un élément supérieur réalisé sous la forme d'un panneau dont l'extrémité libre est reliée, de façon articulée, au vérin de manoeuvre, et par le fait que ce vérin de manoeuvre est un vérin amortisseur à seuil d'effort, qui applique un couple prédéterminé tendant à maintenir la jambe dans la position qu'elle occupe lors de l'atterrissage, tout en autorisant le relevage de ladite jambe avec un effort contrôlé en cas d'atterrissage en catastrophe.

Selon un mode d'exécution particulier, l'élément inférieur formant balancier est articulé sur la structure de l'aérodyne, et l'élément supérieur formant panneau est articulé sur ledit balancier, selon un axe qui est confondu avec l'axe de pivotement.

En variante, l'élément supérieur formant panneau est articulé sur la structure de l'aérodyne, et l'élément inférieur formant balancier est articulé sur des appendices associés dudit panneau, selon un axe qui est légèrement décalé par rapport à l'axe de pivotement. De préférence alors, les appendices de l'élément supérieur formant panneau sont agencés de telle façon que l'axe associé à ces appendices soit déporté en arrière de l'axe de pivotement en position d'atterrissage.

Avantageusement encore, les axes d'articulation de l'amortisseur et du vérin amortisseur sur l'élément supérieur formant panneau, et l'axe de pivotement sont situés dans un même plan.

Selon un mode d'exécution particulier, l'élément supérieur formant panneau a une forme générale triangulaire, en se terminant supérieurement par un double appendice assurant les liaisons articulées de l'amortisseur et du vérin amortisseur, et l'élément inférieur formant balancier a une forme générale triangulaire, en se terminant inférieurement par un ensemble décalé angulairement formant support tournant de roues, dont l'axe est essentiellement vertical lorsque l'atterrisseur est sous charge statique.

Il est par ailleurs intéressant que le vérin amortisseur fonctionne en extension pour le relevage de la jambe d'atterrisseur, et comporte une tige-piston et un cylindre présentant deux chambres successives séparées par une cloison intermédiaire mais communiquant entre elles, avec une première chambre de fluide hydraulique associée à la descente et au relevage normal de la jambe, et une seconde chambre dans laquelle un piston séparateur délimite une chambre de fluide gazeux haute pression, dont la pression détermine le seuil d'effort pour une sortie de la tige réalisée dans une situation d'atterrissage en catastrophe.

Avantageusement alors, un distributeur est associé à la première chambre pour obliger, lorsque ledit distributeur est fermé, le fluide hydraulique de la chambre annulaire correspondante à transiter dans la seconde chambre en passant par au moins un canal associé pour pousser le piston séparateur, un clapet flottant étant en outre prévu dans ladite seconde chambre au niveau de l'orifice dudit ou desdites canaux pour contrôler la nouvelle détente du fluide gazeux.

Selon un mode particulier enfin, l'amortisseur reliant les deux éléments articulés formant la jambe est un amortisseur oléo-pneumatique du type mono-chambre à basse pression.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre un atterrisseur relevable conforme à l'invention, avec sa position d'atterrissage représentée en traits continus et sa position relevée (en situation normale) en traits mixtes, (la position sous charge statique étant seulement partiellement esquissée en pointillés) ;
- la figure 2 est une vue frontale partielle de cet atterrisseur, permettant de mieux distinguer l'agencement des deux éléments formant la jambe d'atterrisseur, dont l'axe d'articulation est ici confondu avec l'axe de pivotement de la jambe ;
- la figure 3 est une vue illustrant l'atterrisseur précédent en position finale de relevage lors d'un atterrissage en catastrophe ;
- la figure 4 est une coupe axiale du vérin amortisseur à seuil d'effort équipant l'atterrisseur précité, tel qu'il se présente en situation d'atterrissage normal ;
- la figure 5 illustre une variante de l'atterrisseur précédent, avec ses différentes positions représentées de façon analogue à la figure 1 ;
- la figure 6 est une vue frontale partielle de l'atterrisseur de la figure 5, à rapprocher de la figure 2, permettant de distinguer le mode particulier d'articulation des deux éléments formant la jambe d'atterrisseur, avec deux axes qui sont ici décalés.

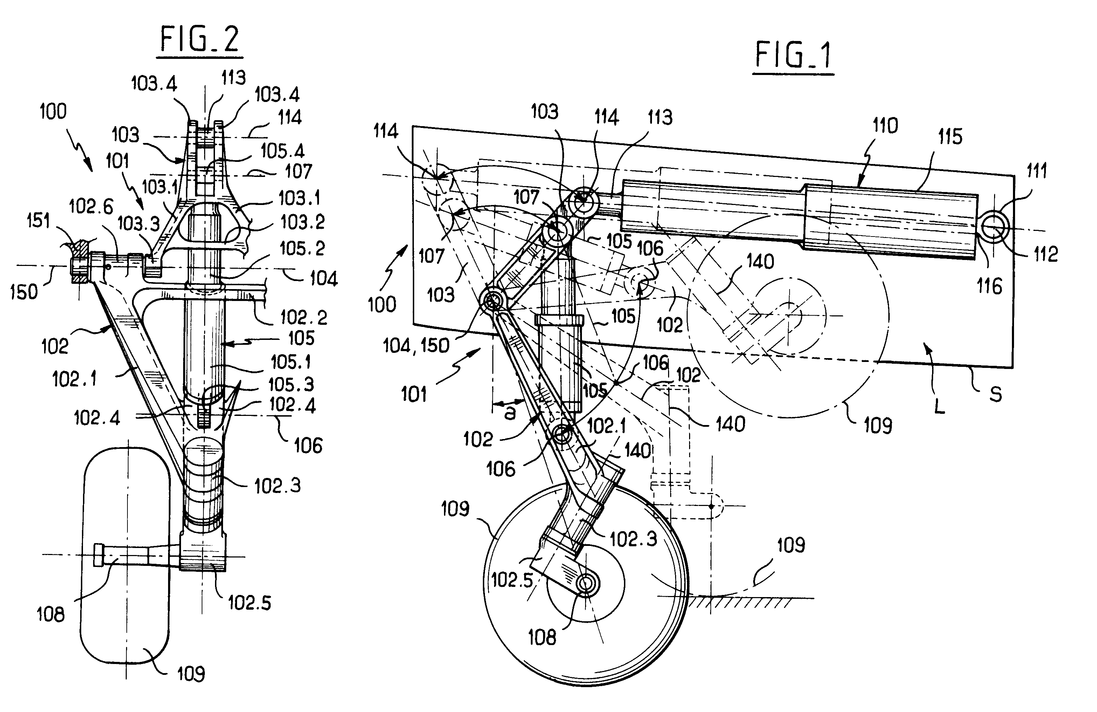

Sur les figures 1 et 2, on distingue un atterrisseur relevable 100 conforme à l'invention, ledit atterrisseur étant illustré en traits continus dans sa position d'atterrissage, et en traits mixtes dans sa position relevée (en situation normale) dans laquelle ledit atterrisseur vient se loger dans un logement L d'une structure d'aérodyne S. L'atterrisseur 100 comporte une jambe d'atterrisseur 101 montée pivotante sur la structure de l'aérodyne autour d'un axe 150 essentiellement perpendiculaire au plan longitudinal médian de cet aérodyne, et équipée d'au moins une fusée de roue 108, ainsi qu'un vérin de manoeuvre associé 110 pour la descente et le relevage de cette jambe d'atterrisseur.

Conformément à un aspect essentiel de l'invention, la jambe d'atterrisseur 101 est réalisée en deux éléments 102, 103 qui sont articulés entre eux autour d'un axe 104 parallèle à l'axe de pivotement 150 de ladite jambe et reliés entre eux par un amortisseur 105, avec un élément inférieur 102 réalisé sous la forme d'un balancier dont l'extrémité libre est équipée d'au moins une fusée de roue 108, et un élément supérieur 103 réalisé sous la forme d'un panneau dont l'extrémité libre est reliée, de façon articulée, au vérin de manoeuvre 110, ledit vérin de manoeuvre étant en outre un vérin amortisseur à seuil d'effort, qui applique un couple prédéterminé tendant à maintenir la jambe d'atterrisseur 101 dans la position qu'elle occupe lors de l'atterrissage, tout en autorisant le relevage de ladite jambe avec un effort contrôlé en cas d'atterrissage en catastrophe.

Avant de décrire les différentes phases de mouvement de l'atterrisseur relevable 100 conforme à l'invention, on va tout d'abord décrire plus en détail les organes structurels de cet atterrisseur, et en particulier, dans un premier temps, les deux éléments constituant la jambe d'atterrisseur 101, et dans un deuxième temps, le vérin de manoeuvre associé réalisé sous la forme d'un vérin amortisseur à seuil d'effort.

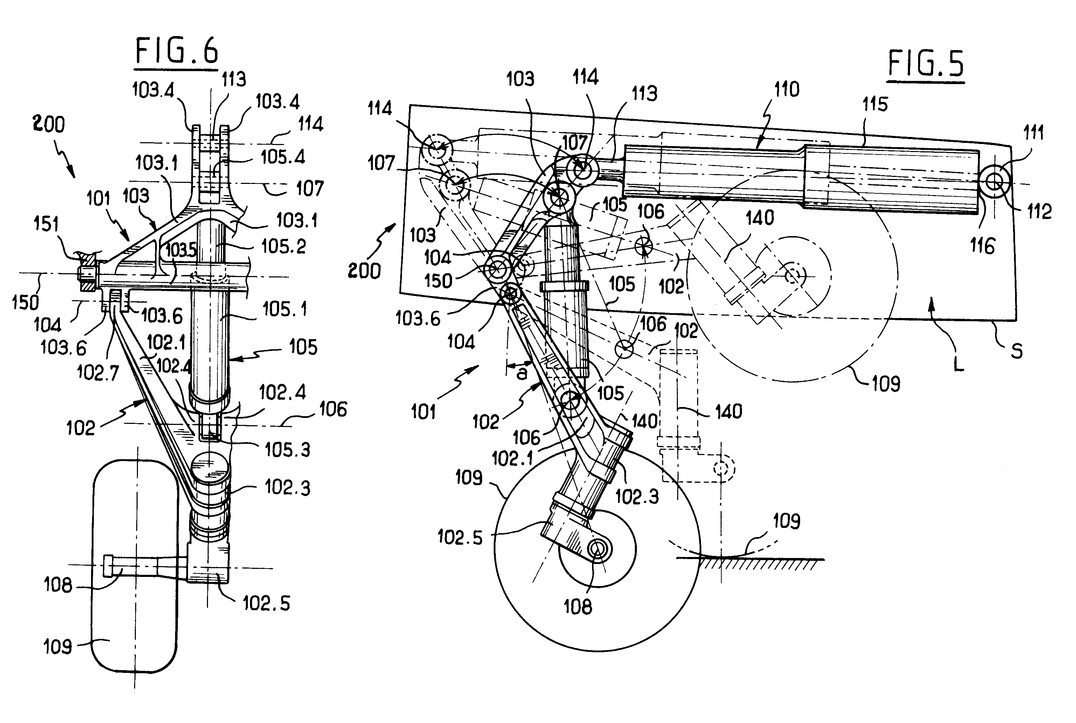

Dans le mode de réalisation illustré aux figures 1 et 2, l'élément inférieur formant balancier 102 est directement articulé sur la structure de l'aérodyne : la coupe partielle de la figure 2 permet ainsi de distinguer les extrémités 102.6 de l'élément inférieur formant balancier 102 correspondant à l'articulation (axe 150) sur une portion 151 faisant partie de la structure de l'aérodyne. L'élément supérieur formant panneau 103 est quant à lui articulé sur l'élément inférieur formant balancier 102, et l'on distingue l'une des deux extrémités associées d'articulation 103.3 de cet élément supérieur, définissant un axe d'articulation 104 qui est ici confondu avec l'axe 150 de pivotement sur la structure de l'aérodyne. Dans le cadre d'une autre variante de l'atterrisseur selon l'invention, qui sera décrite plus en détail en se référant aux figures 5 et 6, on verra qu'il est possible d'agencer la jambe d'atterrisseur réalisée en deux éléments articulés entre eux de telle façon que les axes 104 et 150 soient légèrement décalés.

L'élément inférieur formant balancier 102 a ici une forme générale triangulaire, avec deux bras inclinés 102.1 et une base formant raidisseur 102.2, ces deux bras se rejoignant en partie inférieure de l'élément par un ensemble 102.3 qui est décalé angulairement par rapport audit bras (comme cela est visible sur la figure 1), et qui forme un support tournant de roues d'axe 140. En partie inférieure de ce support 102.3, on trouve en effet une chape tournante 102.5 qui supporte une fusée de roue ou essieu 108 associée à deux roues d'atterrisseur 109. On a représenté ici une seule des deux roues de l'atterrisseur relevable 100, mais il va de soi que l'invention n'est aucunement limitée au regard du nombre de roues concernées. L'élément inférieur formant balancier se déplace ainsi entre une position basse qui correspond à la position d'atterrissage (en traits continus sur la figure 1) et une position relevée (en traits mixtes sur la figures 1). On a également illustré partiellement et en pointillés, la position de l'élément inférieur formant balancier 102 lorsque l'atterrisseur est sous charge statique, position dans laquelle l'axe 140 du support tournant de roues est essentiellement vertical. L'élément inférieur formant balancier 102 présente en outre une liaison d'articulation avec l'amortisseur 105. Cette liaison est ici agencée en prévoyant deux appendices 102.4 permettant l'articulation de l'extrémité 105.3 du corps 105.1 de cet amortisseur 105, l'axe correspondant étant référencé 106. On constate enfin que la ligne joignant l'axe commun d'articulation 104, 150 et l'axe des fusées de roue, définit avec une direction verticale, un angle a qui, lorsque l'atterrisseur est en position d'atterrissage est de l'ordre de 20°.

L'élément supérieur formant panneau 103 est ici également de forme générale triangulaire, en présentant deux bras inclinés 103.1, dont les extrémités libres 103.3 sont associées à l'articulation de cet élément sur l'élément inférieur formant balancier 102. Les bras 103.1 sont réunis par un élément raidisseur 103.2, et se terminent supérieurement par un double appendice 103.4 assurant les liaisons articulées de l'amortisseur 105 et du vérin amortisseur 110. L'amortisseur 105 comporte en effet un tige coulissante 105.2 dont l'extrémité 105.4 est articulée sur l'élément supérieur formant panneau 103, l'axe correspondant étant noté 107. Le vérin amortisseur 110 présente quant à lui une extrémité avant 113 qui s'articule en partie haute des appendices précités 103.4, l'axe correspondant étant noté 114. L'extrémité arrière 111 de cet amortisseur vérin 110 est quant à elle articulée en 112 sur la structure de l'aérodyne, ledit vérin amortisseur étant logé dans le logement L associé à l'atterrisseur relevable, en arrière de l'axe de pivotement de la jambe d'atterrisseur.

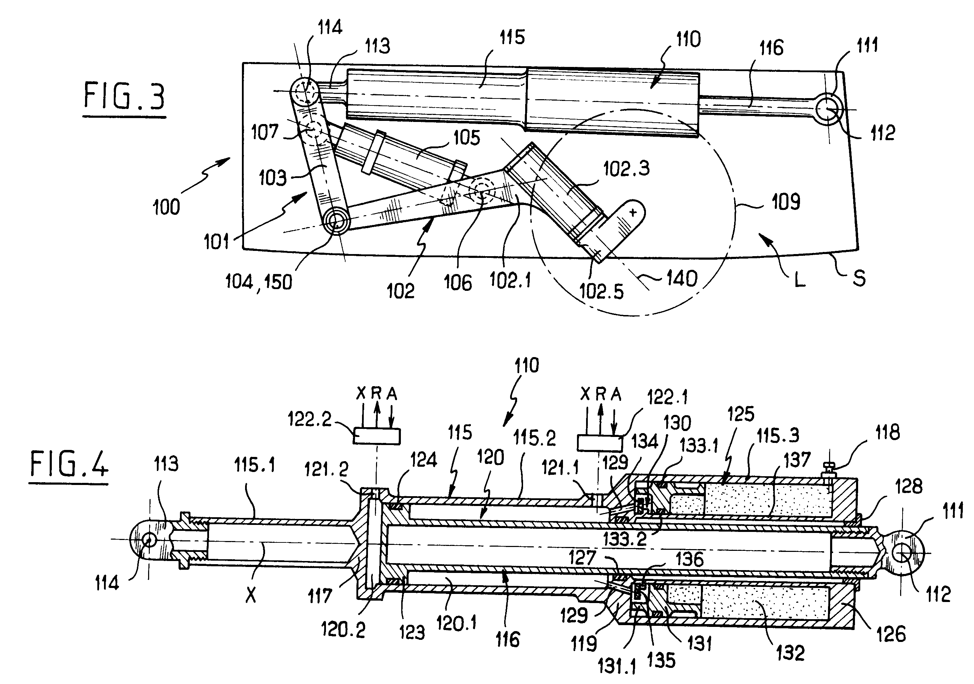

Le vérin amortisseur 110 fonctionne ici en extension pour le relevage de la jambe d'atterrisseur 101, mais il va de soi que ceci n'est aucunement obligatoire, et que l'on pourra prévoir d'autres agencements avec un vérin amortisseur, également à seuil d'effort, fonctionnant au contraire en extension pour la descente de la jambe d'atterrisseur. En l'espèce, le vérin d'amortisseur 110 comporte un cylindre 115, dans lequel coulisse une tige-piston 116, l'axe de l'ensemble étant noté X. Ainsi que cela sera mieux compris lorsque l'on décrira plus en détail la structure précise du vérin amortisseur, en se référant à la figure 4, on verra que la partie avant du cylindre 115 est associée à la descente et au relevage normal de la jambe d'atterrisseur 101, tandis que la partie arrière est associée à la fonction d'écrêtage avec absorption d'énergie en cas d'atterrissage en catastrophe.

Dans toutes les situations normales, le vérin amortisseur 110 se comporte comme un simple vérin hydraulique de manoeuvre, c'est-à-dire que sa partie arrière se comporte comme un fond. La descente normale de la jambe d'atterrisseur 101 s'effectue alors par rentrée de la tige-piston 116 dans le cylindre 115 du vérin amortisseur 110, jusqu'à la position illustrée en traits continus sur la figure 1. Lors du contact des roues de l'atterrisseur avec le sol, si les conditions d'atterrissage sont normales, l'amortisseur 105 intervient seul, avec une rentrée correspondante de sa tige coulissante dans son cylindre, c'est-à-dire que l'angle défini par les deux éléments 102 et 103 formant la jambe d'atterrisseur 101 diminue en conséquence, la position de l'axe 114 étant alors pratiquement immobile. Sous charge statique, l'axe 140 est essentiellement vertical, et l'amortisseur 105 est comprimé. Après décollage de l'aérodyne, l'amortisseur 105 se détend, et le relevage de l'atterrisseur s'effectue normalement par la sortie de la tige-piston du vérin amortisseur 110.

Si par contre le contact avec le sol est trop brutal, c'est-à-dire si la composante verticale de la vitesse dépasse un seuil prédéterminé, par exemple 3 ou 4 m par seconde, on se trouve en situation d'atterrissage en catastrophe, et les roues de l'atterrisseur transmettent très rapidement un effort important à la jambe d'atterrisseur. Dans ce cas, l'amortisseur 105 transmet des efforts qui appliquent un couple important sur l'élément supérieur formant panneau 103, ce qui imprime une rotation de cet élément, en exerçant une traction violente sur l'extrémité avant du vérin amortisseur à seuil d'effort 110. Dans ce cas, le seuil d'effort précité est dépassé, et le vérin amortisseur autorise un pivotement (dans le sens du relevage) de la jambe d'atterrisseur 101, et ce avec un effort contrôlé.

Le vérin amortisseur à seuil d'effort 110 applique ainsi un couple prédéterminé (du fait de l'effort exercé selon la direction de son axe X) qui tend à maintenir la jambe 101 dans la position qu'elle occupe lors de l'atterrissage, tant que les efforts appliqués par l'intermédiaire des roues ne dépassent pas le seuil d'effort correspondant. Au contraire, en cas d'atterrissage en catastrophe, le vérin amortisseur 110 ne se comporte plus comme un simple vérin hydraulique de manoeuvre, mais procure la fonction d'écrêtage avec absorption d'énergie en autorisant le pivotement dans le sens du relevage de la jambe.

On a illustré en figure 3 l'atterrisseur précité en position finale de relevage lors d'un atterrissage en catastrophe, la jambe d'atterrisseur ayant ainsi basculé pour rentrer dans le logement associé L de la structure de l'aérodyne. Il convient d'observer que cette position est légèrement différente de celle qu'occupe l'atterrisseur en position de relevage normal : en effet, en cas de relevage normal, l'amortisseur 105 est détendu, alors qu'en situation d'atterrissage en catastrophe, cet amortisseur s'est contracté, de sorte que l'angle entre les deux éléments constitutifs de la jambe d'atterrisseur est plus fermé.

On a illustré sur les figures 5 et 6 une variante de l'atterrisseur précédent, avec des représentations analogues à celles des figures 1 et 2 précédemment décrites. L'atterrisseur relevable 200 concerné comporte une structure analogue à celle de l'atterrisseur relevable 100, la différence essentielle résidant dans l'agencement de l'articulation entre les deux éléments constituant la jambe d'atterrisseur. Les autres organes qui sont communs à l'atterrisseur précédemment décrits sont donc affectés des mêmes références, et ne feront pas l'objet d'une nouvelle description.

La jambe d'atterrisseur 101 de l'atterrisseur relevable 200 comporte une élément supérieur formant panneau 103 qui est maintenant articulé directement sur la structure de l'aérodyne. Cet élément supérieur est là encore en forme de triangle, mais ses deux bras 103.1 sont réunis par une branche 103.5 associée à l'articulation sur la structure d'aérodyne 151, au niveau de l'axe de pivotement 150 de jambe d'atterrisseur. La partie haute de l'élément supérieur 103 est quant à elle inchangée, et l'on retrouve les articulations correspondantes associées à l'amortisseur 105 d'une part (axe 107) et au vérin amortisseur 110 d'autre part (axe 114). L'élément inférieur formant balancier 102 est quant à lui articulé sur des appendices associés 103.6 de l'élément supérieur formant panneau 103, selon un axe 104 qui n'est plus confondu avec l'axe de pivotement 150, mais est légèrement décalé par rapport à ce dernier. Un tel mode de réalisation est favorable dans la mesure où l'élément supérieur formant panneau est moins soumis aux efforts de flexion.

L'élément inférieur formant balancier 102 est, comme précédemment, de forme générale triangulaire, avec deux bras 102.1 dont les extrémités 102.7 sont associées aux appendices 103.6 de l'élément supérieur formant panneau 102, au niveau de l'axe associé 104. La partie restante de l'élément inférieur formant balancier 102 est essentiellement identique à ce qui a été précédemment décrit.

Ainsi que cela est mieux visible sur la figure 5, il convient de noter que les appendices 103.6 de l'élément supérieur formant panneaux 103 sont agencés de telle façon que l'axe associé 104 de ces appendices soit légèrement déporté en arrière de l'axe de pivotement 150 en position d'atterrissage. Un tel agencement est en effet favorable dans la mesure où il participe également au couple exercé sur l'élément supérieur formant panneau 103 en situation d'atterrissage en catastrophe, complétant ainsi l'action de l'amortisseur 105.

Il est intéressant de noter que, dans les deux modes de réalisation qui viennent d'être décrits, l'axe d'articulation 107 de l'amortisseur 105 sur l'élément supérieur formant panneau 103, l'axe d'articulation 114 du vérin amortisseur 110 sur ce même élément, et l'axe de pivotement 150 sont non seulement parallèles, mais aussi situés dans un même plan. Un tel alignement est naturellement favorable pour la répartition des efforts dans l'élément supérieur formant panneau 103.

On va maintenant décrire, en se référant à la figure 4, la structure du vérin amortisseur équipant l'atterrisseur relevable qui vient d'être décrit, que celui-ci soit réalisé selon l'une ou l'autre des deux variantes précitées.

Le vérin amortisseur 110 comporte un cylindre 115 dans lequel coulisse une tige-piston 116. Le cylindre 115 comporte une portion avant 115.1 associée à l'élément terminal d'articulation 113 (on retrouve l'axe 114 correspondant à l'articulation en partie haute de l'élément supérieur formant panneau de la jambe d'atterrisseur). Le cylindre 115 comporte une portion intermédiaire 115.2, délimitée par un fond avant 117 et une cloison intermédiaire 119, cette partie du vérin amortisseur étant associée à la descente et au relevage normal de la jambe d'atterrisseur. La partie avant de la tige-piston 116, comportant un piston 123, coulisse avec étanchéité dans le cylindre grâce à des joints associés 124 et 127. La portion 115.2 correspond ainsi à une première chambre 120 de fluide hydraulique associée à la descente et au relevage normal de la jambe. Le cylindre 115 comporte enfin une portion arrière 115.3 définissant une seconde chambre 125 qui est délimitée par la cloison intermédiaire précitée 119, et le fond 126 du cylindre. Un piston séparateur 131 coulisse avec étanchéité à l'intérieur de cette portion arrière 115.3, sur une chemise interne 137 du cylindre, grâce à deux joints associés 133.1 et 133.2, et ce piston délimite d'un côté une chambre 130 communiquant par l'intermédiaire d'au moins un canal 129 (on distingue ici deux canaux) avec la chambre annulaire 120.1 de la première chambre de fluide hydraulique 120. La chambre de pleine section de cette première chambre 120 est quant à elle notée 120.2. De l'autre côté du piston séparateur 131, on trouve une chambre 132 de fluide gazeux haute pression, dont la pression détermine le seuil d'effort pour la sortie de la tige 107 intervenant dans une situation d'atterrissage en catastrophe, le vérin amortisseur 110 fonctionnant en effet ici en extension pour le relevage de la jambe d'atterrisseur. La chambre 132 est initialement remplie par une fluide gazeux haute pression par une valve de gonflage associée 118. Au niveau de l'extrémité arrière du cylindre 115, on a prévu ici une bague 128 de guidage et de protection.

La partie centrale 115.2 du cylindre 115 comporte en outre deux orifices d'extrémité 121.1 et 121.2 qui communiquent avec le circuit hydraulique de l'aérodyne par des organes de connexion (tels que des distributeurs) notés 122.1 et 122.2. On a noté schématiquement X, R et A les trois lignes de connexion associées à chacun de ces distributeurs, correspondant respectivement à la fermeture, au retour vers la bâche du circuit, et à l'alimentation en fluide sous pression. Ainsi que cela est aisé à comprendre, l'admission de fluide hydraulique par l'orifice associé 121.2 provoque la sortie de la tige-piston 116, le fluide de la chambre annulaire 120.1 sortant par l'autre orifice associé 121.1 du fait du maintien du piston séparateur 131 en appui, par une bride associée 131.1, contre la cloison intermédiaire 119. On réalise ainsi le relevage, dans des conditions normales, de l'atterrisseur. Pour la sortie, le fluide hydraulique est au contraire admis par l'orifice 121.1 dans la chambre annulaire 120.1, et le fluide de la chambre 120.2 repasse dans le circuit par l'orifice associé 121.2.

En cas d'atterrissage en catastrophe, le distributeur 122.1 est fermé (ligne X) de sorte que l'effort de traction exercé violemment sur l'extrémité avant du cylindre oblige alors le fluide hydraulique de la chambre annulaire 120.1 à transiter par les canaux 129 dans la chambre 130, en poussant le piston séparateur 131 : la sortie de la tige-piston est ainsi parfaitement contrôlée, et le vérin amortisseur 110 autorise le relevage par pivotement de la jambe d'atterrisseur. Il convient en outre, lorsque ladite tige-piston a été ainsi sortie, de pouvoir contrôler la nouvelle détente du fluide gazeux : à cet effet, on a prévu un clapet flottant 134, dont la course axiale est limitée d'une part par la cloison intermédiaire 119, et d'autre part par une collerette 136 de la chemise interne 137 du cylindre servant à délimiter la seconde chambre 125. Le clapet flottant 134 présente en outre des perçages de petit diamètre 135 au niveau de certains au moins des orifices des canaux 129, ce qui permet, lorsque ce clapet flottant est en appui contre la cloison intermédiaire 119, d'obtenir un laminage contrôlant parfaitement la nouvelle détente du fluide gazeux.

Pour ce qui est de l'amortisseur 105 disposé entre les deux éléments constituant la jambe d'atterrisseur, on pourra utiliser un atterrisseur oléo-pneumatique de type conventionnel, par exemple un amortisseur mono-chambre à basse pression.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Atterrisseur relevable d'aérodyne, notamment pour hélicoptère, comportant une jambe d'atterrisseur montée pivotante sur une structure de l'aérodyne autour d'un axe essentiellement perpendiculaire au plan longitudinal médian de cet aérodyne, et équipée d'au moins une fusée de roue, ainsi qu'un vérin de manoeuvre associé pour la descente et le relevage de ladite jambe, caractérisé par le fait que la jambe d'atterrisseur (101) est réalisée en deux éléments (102, 103) qui sont articulés entre eux autour d'un axe (104) parallèle à l'axe de pivotement de ladite jambe et reliés entre eux par un amortisseur (105), avec un élément inférieur (102) réalisé sous la forme d'un balancier dont l'extrémité libre est équipée d'au moins une fusée de roue, et un élément supérieur (103) réalisé sous la forme d'un panneau dont l'extrémité libre est reliée, de façon articulée, au vérin de manoeuvre (110), et par le fait que ce vérin de manoeuvre (110) est un vérin amortisseur à seuil d'effort, qui applique un couple prédéterminé tendant à maintenir la jambe (101) dans la position qu'elle occupe lors de l'atterrissage, tout en autorisant le relevage de ladite jambe avec un effort contrôlé en cas d'atterrissage en catastrophe.

2. Atterrisseur selon la revendication 1, caractérisé par le fait que l'élément inférieur formant balancier (102) est articulé sur la structure de l'aérodyne, et l'élément supérieur formant panneau (103) est articulé sur ledit balancier, selon un axe (104) qui est confondu avec l'axe de pivotement (150).

3. Atterrisseur selon la revendication 1, caractérisé par le fait que l'élément supérieur formant panneau (103) est articulé sur la structure de l'aérodyne, et l'élément inférieur formant balancier (102) est articulé sur des appendices associés (103.6) dudit panneau, selon un axe (104) qui est légèrement décalé par rapport à l'axe de pivotement (150).

4. Atterrisseur selon la revendication 3, caractérisé par le fait que les appendices (103.6) de l'élément supérieur formant panneau (103) sont agencés de telle façon que l'axe (104) associé à ces appendices soit déporté en arrière de l'axe de pivotement (150) en position d'atterrissage.

5. Atterrisseur selon l'une des revendications 1 à 4, caractérisé par le fait que les axes d'articulation (107 ; 114) de l'amortisseur (105) et du vérin amortisseur (110) sur l'élément supérieur formant panneau (103), et l'axe de pivotement (150) sont situés dans un même plan.

6. Atterrisseur selon l'une des revendications 1 à 5, caractérisé par le fait que l'élément supérieur formant panneau (103) a une forme générale triangulaire, en se terminant supérieurement par un double appendice (103.4) assurant les liaisons articulées de l'amortisseur (105) et du vérin amortisseur (110).

7. Atterrisseur selon l'une des revendications 1 à 6, caractérisé par le fait que l'élément inférieur formant balancier (102) a une forme générale triangulaire, en se terminant inférieurement par un ensemble (102.3) décalé angulairement formant support tournant de roues, dont l'axe (140) est essentiellement vertical lorsque l'atterrisseur est sous charge statique.

8. Atterrisseur selon l'une des revendications 1 à 7, caractérisé par le fait que le vérin amortisseur (110) fonctionne en extension pour le relevage de la jambe d'atterrisseur, et comporte une tige-piston (116) et un cylindre (115) présentant deux chambres successives (120, 125) séparées par une cloison intermédiaire (119) mais communiquant entre elles, avec une première chambre (120) de fluide hydraulique associée à la descente et au relevage normal de la jambe (101), et une seconde chambre (125) dans laquelle un piston séparateur (131) délimite une chambre (132) de fluide gazeux haute pression, dont la pression détermine le seuil d'effort pour une sortie de la tige (116) réalisée dans une situation d'atterrissage en catastrophe.

9. Atterrisseur selon la revendication 8, caractérisé par le fait qu'un distributeur (122.1) est associé à la première chambre (120) pour obliger, lorsque ledit distributeur est fermé, le fluide hydraulique de la chambre annulaire correspondante (120.1) à transiter dans la seconde chambre (130) en passant par au moins un canal associé (129) pour pousser le piston séparateur (131), un clapet flottant (134) étant en outre prévu dans ladite seconde chambre au niveau de l'orifice dudit ou desdits canaux pour contrôler la nouvelle détente du fluide gazeux.

10. Atterrisseur selon l'une des revendications 1 à 9, caractérisé par le fait que l'amortisseur (105) reliant les deux éléments articulés (102, 103) formant la jambe (101) est un amortisseur oléo-pneumatique du type mono-chambre à basse pression.
